# EUROPEAN PATENT SPECIFICATION

(11) **EP 4 015 253 B1**
(45) Date of publication and mention of the grant of the patent: **12.06.2024**
(21) Application number: 21212072.9
(22) Date of filing: 02.12.2021
(51) Int. Cl.: B60C 15/06, B60C 15/04

(54) **TIRE WITH IMPROVED BEAD STRUCTURE**
REIFEN MIT VERBESSERTER WULSTSTRUKTUR
PNEU AYANT UNE STRUCTURE DE TALON AMÉLIORÉE

(30) Priority: 16.12.2020 US 202017123215
(43) Date of publication of application: 22.06.2022
(73) Proprietor: The Goodyear Tire & Rubber Company, Akron, OH 44316 (US)
(72) Inventor: UEYOKO, Kiyoshi, Copley, 44321 (US); DAS, Badal, Strongsville, 44136 (US)
(74) Representative: Kutsch, Bernd

(56) References cited:
- EP-A1- 3 653 405
- WO-A1-2013/182599
- WO-A1-2019/240101
- DE-A1-102018 210 826
- JP-A- 2019 085 051
- US-A1- 2012 097 312
- US-B1- 6 571 847

## Description

### Field of the Invention

The invention relates in general to pneumatic tires, and more particularly to a bead construction for heavy duty vehicles such as aircraft or trucks.

### Background of the Invention

Annular tensile members, commonly referred to as tire bead cores, are designed to securely hold the tire on the rim during use. The tire beads provide a radially inner portion between the bead core and the rim that is radially compressed, and as this portion is compressed, the bead core is placed in tension. Radial compression occurs as the tire is mounted on a tapered rim seat by the action of the internal pressure of the tire pushing the bead axially outwardly toward the vertical bead flange.

Recently, attempts have been made to provide a heavy-duty bead construction that has a reduced weight. One approach has been to use the combination of steel wire and aramid core. The primary issue with synthetic cords is that when provided in a cable that has the cords twisted, several problems are created. The first is called creep under load. The synthetic cables or cords will stretch under load and as the plastic flows, the restraining force actually will lower with time, accordingly the use of steel in a radially innermost layer is essential if bead retention forces are to be reliably constant. A second problem is fretting, Aramid, in particular, and many other plastics have a condition where small brittle fractures occur if the cords are placed in compression. Cabling such cords actually increase the likelihood of creating these fractures. In a bead core, almost all of the loads are in tension except when the bead is helically or spirally wound. In those cases, the cords work against each other creating small bending forces, which over time result in minute abrading friction of the adjacent cords, resulting in fretting.

Thus, an improved bead design which is light weight without sacrificing strength is desired, and that further overcomes the disadvantages mentioned above.

US 2012/097312 A describes a tire in accordance with the preamble of claim 1.

US 6,571,847 B1 describes a tire having several sheath layers around a bead core. WO 2013/182599 A1 and WO 2019/240101 A1 describe a tire having several sheath layers around a bead core, the sheath layers comprising sheath wires with a different wire diameter.

Tires having a flipper wrapped around a bead core are known from EP 3 653 405 A1, DE 10 2018 210 826 A1 and JP 2019 085051 A.

### Summary of the Invention

The invention relates to a tire in accordance with claim 1.

Dependent claims refer to preferred embodiments of the invention.

The invention provides in a first aspect a pneumatic radial tire having a bead portion provided therein with a bead core, wherein the bead core is wrapped with a flipper, wherein the flipper is formed of a reinforced material, wherein the flipper has an axially inner leg that extends radially outward to a radial distance Li from the reference line XX', wherein the line XX' extends through the geometric center of the bead core, wherein the radial distance Li is equal to or greater than the bead radius, as measured in a radial direction from line XX'.

### Definitions

"Aspect Ratio" means the ratio of a tire's section height to its section width.

"Axial" and "axially" mean the lines or directions that are parallel to the axis of rotation of the tire.

"Bead" mean generally that part of the tire comprising an annular tensile member, the radially inner beads are associated with holding the tire to the rim being wrapped by ply cords and shaped, with or without other reinforcement elements such as flippers, chippers, apexes or fillers, toe guards and chafers.

"Radial" and "radially" mean directions radially toward or away from the axis of rotation of the tire.

### Brief Description of the Drawings

The invention will be described by way of example and with reference to the accompanying drawings in which:
FIG. 1 is a cross-sectional view of one half of a radial ply tire;
FIG. 2 is a close-up view of the lower sidewall and bead portion of the tire of FIG. 1; and
FIG. 3 is a close-up view of the bead area of the tire of FIG. 1.

### Detailed Description of Preferred Embodiments of the Invention

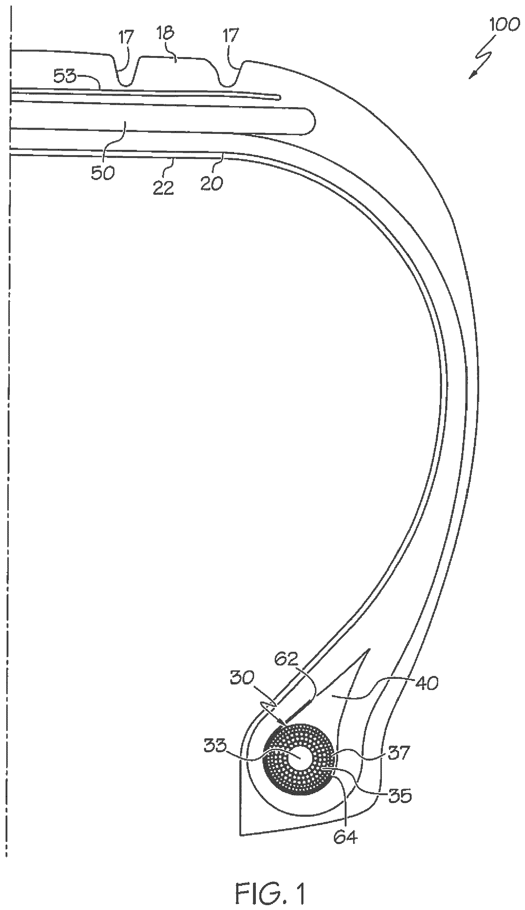

With reference to FIG. 1, a cross-sectional view of one half of a radial ply tire 100 is shown. The tire 100, as illustrated, is a construction for use as an aircraft tire. The tire 100 by way of example is a radial aircraft tire exposed to high internal pressures and tremendous loads. Other such tires such as earthmover, commercial truck and farm tires are also ideally suited for using the bead core of the present invention.

The tire 100 preferably is a radial ply tire of the tubeless type construction. The tire 100 preferably has an air imperious inner liner 22 which contains fluid or air under pressure. Radially outward of the inner liner 22 are one or more radial plies 20. Each ply 20 extends from an annular tensile member commonly referred to as a bead core 30. As shown the plies 20 wrap about the bead core 30 either turning axially out and up forming a ply turnup or alternately turning axially in and under the bead core 30. Radially above the bead core 30 is preferably a rubber apex 40.

Radially outward of the carcass plies 20 is preferably a belt package 50 comprising a plurality of belt reinforcing layers, each layer is reinforced with parallel reinforcement cords. A top belt layer 53 is shown radially outward of the belt layers 50. Above the top belt layer 53 is a tread 18 as shown, the tread 18 has a plurality of optional circumferentially continuous grooves 17. The tire structure 100 as mentioned is an example of one type of tire structures that can utilize the bead core 30 of the present invention. Although the tire 100 as shown is an aircraft tire structure, the invention is usable in any highly loaded heavy-duty tire structure.

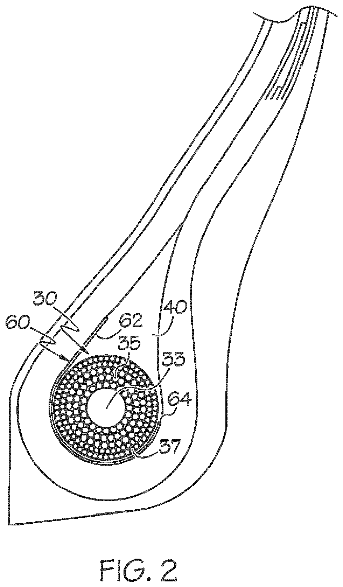

With reference to FIG. 2, the bead core 30 of the present invention is shown. As illustrated the central core 33 is shown as a single wire or rod wound at 360 degree, wherein the ends of the wire are preferably welded to form one continuous hoop or central core 33. The central core 33 preferably has a diameter in the range of 3 mm to 15 mm, and more preferably in the range of 5 to 15 mm.

The central core 33 is preferably made of an alloy of aluminum, or other lightweight metal alloy such as magnesium, titanium, or any metal alloy having a weight less than steel. The central core may be solid metal such as shown, or may be an annulus formed of metal such as aluminum, or formed of plastic, aramid, carbon fiber or nylon. The center of the annulus (tube) may be filled with air or a filler such as aramid, carbon fiber, or plastic resin. The central core may also be formed of solid aramid or a aramid annulus (pipe), solid carbon fiber, or a carbon fiber annulus (pipe) or a metal annulus (pipe) filled with either plastic resin or air.

As further illustrated, the central core 33 is wrapped by an annular row of inner sheath layers 35, namely three or four rows of annular inner sheath layers 35, wherein each inner sheath layer has a plurality of wires arranged in a circle with a diameter B.

The diameter of the wires of the inner sheath layer 35 are the same, and range in size from 1.5 mm to 3 mm, and preferably in the range of from 1.8 mm to 2.5 mm. There are three to four rows of annular sheath layers 35. The wires of the sheath layers are steel that are helically or spirally wound about the central core 33.

The bead core 30 further includes one or two annular rows of outer sheath layers 37. The wires in the outer annular row have a smaller diameter than the diameter of the wires in the inner annular sheath layers. The diameter of the wires of the outer sheath layer 37 are the same, and range in size from 1.5 mm to 2.5 mm or in the range of from 1 mm to 2 mm.

The entire bead is preferably coated in an adhesive rubber layer and then a textile ply cord is helically wrapped around the bead cord.

Wrapped around the entire bead core is a flipper 60, having an axially inner leg 62 and an axially outer leg 64. The flipper 60 is formed from a reinforced fabric wrapped about the bead core such as nylon or polyester.

The reinforcement cords of the flipper material preferably have a 840 dtex/2, or a 1260 dtex/2, or a 1260 dtex/3, a 1890 dtex/2 and a 1890 dtex/3 nylon cord construction.

Preferably, the flipper material is nylon 6/6.

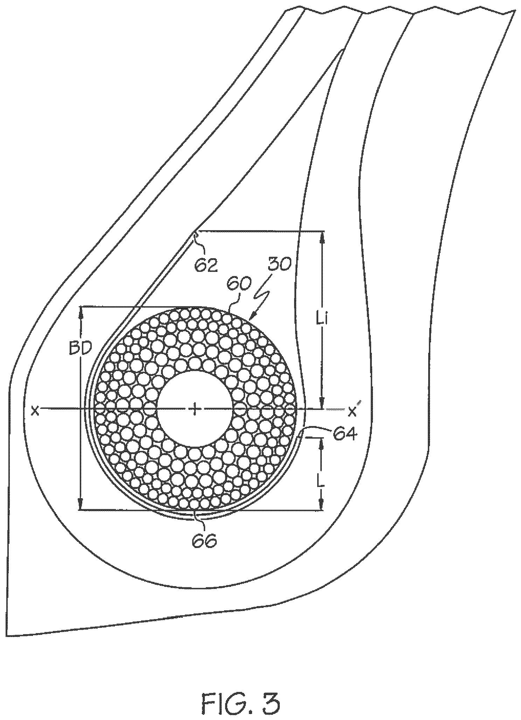

As shown in FIG. 3, the axially inner leg 62 of the flipper 60 is located at a radial distance Li from the reference line XX', wherein the line XX' extends through the geometric center of the bead core. The radial bead height Li is preferably greater than the bead radius, as measured in a radial direction from line XX'. The axially outer end of the flipper 60 is located at a radial distance L from the bottom 66 of the bead core. The axially outer end may terminate in the range: from radially outward of the bottom of the bead core 66 to radially outward but radially inward of the bead core center, wherein the radial distance L is measured from the bottom 66 of the bead core.

In a preferred embodiment, the radial distance Li is at least 20 percent greater than the extension or radius of the bead core 30 or is in a range of from 1.2 to 1.6 times the extension or radius of the bead core 30, both as measured from the geometric center 33 in a radial direction from line XX'.

In a preferred embodiment, the radially outermost end point of the axially outer leg 64 is located radially inward of the geometric center 33 of the bead core 30 at a radial distance in a range of from 10 to 40 percent or from 15 to 25 percent of the radial distance between the geometric center 33 to a line parallel to the line XX' and tangent to the radially innermost point of the bead core 30.

## Claims

1. A pneumatic radial tire having a bead portion provided therein with a bead core (30), wherein the bead core (30) is wrapped with a flipper (60) formed of a reinforced material, and wherein
(i) the flipper (60) has an axially inner leg (62) that extends radially outward to a radial distance Li from a reference line XX', wherein the line XX' extends through the geometric center (33) of the bead core (30) and in parallel with the axial direction of tire (100), and wherein the radial distance Li is equal to or greater than the extension or radius of the bead core (30), as measured from the geometric center (33) in a radial direction from line XX';
(ii) the flipper (60) has an axially inner end point of the axially inner leg (62) of the flipper (60) and an axially outer end point of an axially outer leg (64) of the flipper (60), the axially outer end point being located radially inward of the geometric center (33) of the bead core (30);
**characterized in that**
the bead core (30) comprises a first layer (35) of a total of three or four annular rows of sheath wires in the first layer (35) surrounding the geometric center (33) of the bead core (30), said sheath wires in the first layer (35) having the same diameter, and a second layer (37) formed of one or two rows of sheath wires in the second layer (37) surrounding the first layer (35), said sheath wires in the second layer (37) having the same diameter, wherein the sheath wires in the second layer (37) have a diameter in the range of from 1.5 mm to 2.5 mm or from 1 to 2 mm, wherein the sheath wires in the first layer (35) have a diameter in the range of from 1.5 mm to 3 mm, wherein the sheath wires in the second layer (37) have a diameter less than the sheath wires in the first layer (35), and wherein the sheath wires in the first layer (35) and in the second layer (37) are steel wires that are helically or spirally wound about the geometric center (33) of the bead core (30).

2. The pneumatic tire of claim 1 wherein the axially inner leg (62) has a radial height greater than the diameter (BD) of the bead core (30), wherein the diameter (BD) of the bead core (30) and the radial height are measured from a line parallel to the line XX' and tangent to the radially innermost point of the bead core (30).

3. The pneumatic tire of at least one of the previous claims wherein the flipper (60) has an axially outer leg (64) having a radially outermost end point, and wherein the radially outermost end point is located radially outward of the radially innermost point of the bead core (30).

4. The pneumatic radial tire of claim 1 wherein the diameter of the sheath wires of the first layer (35) is in the range of from 1.8 mm to 2.5 mm.

5. The pneumatic radial tire of at least one of the previous claims wherein the cross-sectional shape of the bead core (30) is an annulus having a hollow inner portion.

6. The pneumatic radial tire of at least one of the previous claims wherein the material of the bead core (30) is selected from the group of titanium, aluminum, magnesium, or other metal alloy or comprises such a material.

7. The pneumatic radial tire of at least one of the previous claims wherein the material of the bead core (30) is selected from the group of aramid, carbon fiber, plastic or other nonmetal material, or comprises such a material.

8. The pneumatic radial tire of at least one of the previous claims wherein the radial distance Li is at least 20 percent greater than the extension or radius of the bead core (30) or is in a range of from 1.2 to 1.6 times the extension or radius of the bead core (30), both as measured from the geometric center (33) in a radial direction from line XX'.

9. The pneumatic tire of at least one of the previous claims wherein the radially outermost end point of the axially outer leg (64) is located radially inward of the geometric center (33) of the bead core (30) at a radial distance in a range of from 10 to 40 percent of the radial distance between the geometric center (33) to a line parallel to the line XX' and tangent to the radially innermost point of the bead core (30).

10. The pneumatic tire of at least one of the previous claims wherein the bead core (30) is coated with an adhesive rubber layer and, optionally, wherein a textile ply cord is preferably helically wrapped around the adhesive rubber layer of the bead core (30).

## Patentansprüche

1. Radialer Luftreifen, der einen Wulstabschnitt aufweist, der mit einem Wulstkern (30) versehen ist, wobei der Wulstkern (30) mit einem Wulstschutz (60) umwickelt ist, der aus einem verstärkten Material gebildet ist, und wobei
(i) der Wulstschutz (60) einen axial inneren Schenkel (62) aufweist, der sich radial nach außen bis zu einem radialen Abstand Li von einer Bezugslinie XX' erstreckt, wobei die Linie XX' sich durch den geometrischen Mittelpunkt (33) des Wulstkerns (30) und parallel zu der axialen Richtung des Reifens (100) erstreckt, und wobei der radiale Abstand Li gleich oder größer als die Ausdehnung oder der Radius des Wulstkerns (30) ist, gemessen von dem geometrischen Mittelpunkt (33) in einer radialen Richtung von der Linie XX';
(ii) der Wulstschutz (60) einen axial inneren Endpunkt des axial inneren Schenkels (62) des Wulstschutzes (60) und einen axial äußeren Endpunkt eines axial äußeren Schenkels (64) des Wulstschutzes (60) aufweist, wobei der axial äußere Endpunkt radial innerhalb der geometrischen Mitte (33) des Wulstkerns (30) angeordnet ist;
**dadurch gekennzeichnet, dass**
der Wulstkern (30) eine erste Schicht (35) aus insgesamt drei oder vier ringförmigen Reihen von Manteldrähten in der ersten Schicht (35) umfasst, die den geometrischen Mittelpunkt (33) des Wulstkerns (30) umgeben, wobei die oben genannten Manteldrähte in der ersten Schicht (35) den gleichen Durchmesser haben, und eine zweite Schicht (37), die aus einer oder zwei Reihen von Manteldrähten in der zweiten Schicht (37) gebildet ist, die die erste Schicht (35) umgeben, wobei die oben genannten Manteldrähte in der zweiten Schicht (37) den gleichen Durchmesser haben, wobei die Manteldrähte in der zweiten Schicht (37) einen Durchmesser in dem Bereich von 1,5 mm bis 2,5 mm oder von 1 bis 2 mm haben, wobei die Manteldrähte in der ersten Schicht (35) einen Durchmesser in dem Bereich von 1,5 mm bis 3 mm haben, wobei die Manteldrähte in der zweiten Schicht (37) einen geringeren Durchmesser als die Manteldrähte in der ersten Schicht (35) haben, und wobei die Manteldrähte in der ersten Schicht (35) und in der zweiten Schicht (37) Stahldrähte sind, die schraubenförmig oder spiralförmig um den geometrischen Mittelpunkt (33) des Wulstkerns (30) gewickelt sind.

2. Luftreifen nach Anspruch 1, wobei der axial innere Schenkel (62) eine radiale Höhe aufweist, die größer ist als der Durchmesser (BD) des Wulstkerns (30), wobei der Durchmesser (BD) des Wulstkerns (30) und die radiale Höhe von einer Linie aus gemessen werden, die parallel zu der Linie XX' und tangential zu dem radial innersten Punkt des Wulstkerns (30) verläuft.

3. Luftreifen nach mindestens einem der vorhergehenden Ansprüche, wobei der Wulstschutz (60) einen axial äußeren Schenkel (64) aufweist, der einen radial äußersten Endpunkt aufweist, und wobei der radial äußerste Endpunkt radial außerhalb des radial innersten Punktes des Wulstkerns (30) angeordnet ist.

4. Radialer Luftreifen nach Anspruch 1, wobei der Durchmesser der Manteldrähte der ersten Schicht (35) in dem Bereich von 1,8 mm bis 2,5 mm liegt.

5. Radialer Luftreifen nach mindestens einem der vorhergehenden Ansprüche, wobei die Querschnittsform des Wulstkerns (30) ein Ring ist, der einen hohlen Innenteil aufweist.

6. Radialer Luftreifen nach mindestens einem der vorhergehenden Ansprüche, wobei das Material des Wulstkerns (30) aus der Gruppe von Titan, Aluminium, Magnesium oder einer anderen Metalllegierung ausgewählt ist oder ein solches Material umfasst.

7. Radialer Luftreifen nach mindestens einem der vorhergehenden Ansprüche, wobei das Material des Wulstkerns (30) aus der Gruppe von Aramid, Kohlefaser, Kunststoff oder einem anderen nichtmetallischen Material ausgewählt ist oder ein solches Material umfasst.

8. Radialer Luftreifen nach mindestens einem der vorhergehenden Ansprüche, wobei der radiale Abstand Li mindestens 20 Prozent größer ist als die Ausdehnung oder der Radius des Wulstkerns (30) oder in einem Bereich von dem 1,2- bis 1,6-fachen der Ausdehnung oder des Radius des Wulstkerns (30) liegt, jeweils gemessen von dem geometrischen Mittelpunkt (33) in einer radialen Richtung von der Linie XX'.

9. Luftreifen nach mindestens einem der vorhergehenden Ansprüche, wobei der radial äußerste Endpunkt des axial äußeren Schenkels (64) radial innerhalb des geometrischen Mittelpunkts (33) des Wulstkerns (30) in einem radialen Abstand in dem Bereich von 10 bis 40 Prozent des radialen Abstands zwischen dem geometrischen Mittelpunkt (33) und einer Linie parallel zur Linie XX' und tangential zu dem radial innersten Punkt des Wulstkerns (30) angeordnet ist.

10. Luftreifen nach mindestens einem der vorhergehenden Ansprüche, wobei der Wulstkern (30) mit einer klebenden Gummischicht beschichtet ist und optional wobei ein textiler Lagenkord vorzugsweise spiralförmig um die klebende Gummischicht des Wulstkerns (30) gewickelt ist.

## Revendications

1. Bandage pneumatique dans lequel on prévoit une portion faisant office de talon munie d'une tringle de talon (30), dans lequel la tringle de talon (30) est enveloppée d'une protection de tringle (60) réalisée à partir d'une matière qui a été renforcée ; et dans lequel :
(i) la protection de tringle (60) possède une branche (62) interne dans la direction axiale, qui s'étend vers l'extérieur, dans la direction radiale, jusqu'à une distance radiale Li à partir d'une ligne de référence XX' ; dans lequel la ligne XX' s'étend en passant à travers le centre géométrique (33) de la tringle de talon (30) et parallèlement à la direction axiale du bandage pneumatique (100) ; et dans lequel la distance radiale Li est égale ou supérieure à l'étendue ou au rayon de la tringle de talon (30), tels qu'on les mesure à partir du centre géométrique (33) dans une direction radiale à partir de la ligne XX' ;
(ii) la protection de tringle (60) possède un point terminal interne, dans la direction axiale, de la branche (62), interne dans la direction axiale, de la protection de tringle (60) et un point terminal externe, dans la direction axiale, d'une branche (64), externe dans la direction axiale, de la protection de tringle (60), le point terminal externe, dans la direction axiale étant situé, dans la direction radiale, à l'intérieur du centre géométrique (33) de la tringle de talon (30) ;
**caractérisé en ce que**
la tringle de talon (30) comprend une première couche (35) constituée par un total de trois ou quatre rangées annulaires de fils métalliques sous gaines dans la première couche (35), qui entourent le centre géométrique (33) de la tringle de talon (30), lesdits fils métalliques sous gaines dans la première couche (35) possédant le même diamètre, et une deuxième couche (37) constituée par une ou deux rangées de fils métalliques sous gaines dans la deuxième couche (37) qui entoure la première couche (35), lesdits fils métalliques sous gaines dans la deuxième couche (37) possédant le même diamètre ; dans lequel les fils métalliques sous gaines dans la deuxième couche (37) possèdent un diamètre qui se situe dans la plage allant de 1,5 mm à 2,5 mm ou de 1 mm à 2 mm ; dans lequel les fils métalliques sous gaines dans la première couche (35) possèdent un diamètre qui se situe dans la plage allant de 1,5 mm à 3 mm ; dans lequel les fils métalliques sous gaines dans la deuxième couche (37) possèdent un diamètre qui est inférieur à celui des fils métalliques sous gaines dans la première couche (35) ; et dans lequel les fils métalliques sous gaines dans la première couche (35) et dans la deuxième couche (37) sont des fils métalliques en acier qui sont enroulés de manière hélicoïdale ou en spirale autour du centre géométrique (33) de la tringle de talon (30).

2. Bandage pneumatique selon la revendication 1, dans lequel la branche (62) interne dans la direction axiale possède une hauteur radiale qui est supérieure au diamètre (BD) de la tringle de talon (30) ; dans lequel le diamètre (BD) de la tringle de talon (30) et la hauteur radiale sont mesurés à partir d'une ligne parallèle à la ligne XX' et tangente au point de la tringle de talon (30) situé le plus à l'intérieur dans la direction radiale.

3. Bandage pneumatique selon au moins une des revendications précédentes, dans lequel la protection de tringle (60) possède une branche (64) externe dans la direction axiale qui possède un point terminal situé le plus à l'extérieur dans la direction radiale ; et dans lequel le point terminal situé le plus à l'extérieur dans la direction radiale est situé à l'extérieur, dans la direction radiale, du point terminal de la tringle de talon (30), situé le plus à l'intérieur dans la direction radiale.

4. Bandage pneumatique à nappe radiale selon la revendication 1, dans lequel le diamètre des fils métalliques sous gaines de la première couche (35) se situe dans la plage allant de 1,8 mm à 2,5 mm.

5. Bandage pneumatique à nappe radiale selon au moins une des revendications précédentes, dans lequel la configuration de la tringle de talon (30) en section transversale est celle d'un anneau qui possède une portion interne creuse.

6. Bandage pneumatique à nappe radiale selon au moins une des revendications précédentes, dans lequel la matière de la tringle de talon (30) est choisie parmi le groupe constitué par le titane, l'aluminium, le magnésium ou un autre alliage métallique, ou bien comprend une telle matière.

7. Bandage pneumatique à nappe radiale selon au moins une des revendications précédentes, dans lequel la matière de la matière de la tringle de talon (30) est choisie parmi le groupe constitué par de l'aramide, de la fibre de carbone, une matière plastique ou une autre matière non métallique, ou bien comprend une telle matière.

8. Bandage pneumatique à nappe radiale selon au moins une des revendications précédentes, dans lequel la distance radiale Li est supérieure à raison d'au moins 20 pour cent à l'étendue ou au rayon de la tringle de talon (30) ou se situe dans une plage qui correspond à 1,2 à 1,6 fois l'étendue ou le rayon de la tringle de talon (30), tous deux tels que mesurés à partir du centre géométrique (33) dans une direction radiale à partir de la ligne XX'.

9. Bandage pneumatique selon au moins une des revendications précédentes, dans lequel le point terminal situé le plus à l'extérieur, dans la direction axiale, de la branche (64), externe dans la direction axiale, est situé, dans la direction radiale, à l'intérieur du centre géométrique (33) de la tringle de talon (30) à une distance radiale qui se situe dans une plage qui représente de 10 à 40 pour cent de la distance radiale qui s'étend entre le centre géométrique (33) et une ligne parallèle à la ligne XX' et tangente au point de la tringle de talon (30) situé le plus à l'intérieur dans la direction radiale.

10. Bandage pneumatique selon au moins une des revendications précédentes, dans lequel la tringle de talon (30) est revêtue d'une couche adhésive à base de caoutchouc ; et, de manière facultative, dans lequel un câblé de nappe en textile est de préférence enroulé de manière hélicoïdale autour de la couche adhésive de la tringle de talon (30), à base de caoutchouc.
